# EUROPÄISCHE PATENTSCHRIFT

(11) **EP 2 692 219 B1**
(45) Veröffentlichungstag und Bekanntmachung des Hinweises auf die Patenterteilung: **20.06.2018**
(21) Anmeldenummer: 13003316.0
(22) Anmeldetag: 29.06.2013
(51) Int. Cl.: A01C 15/00

(54) **Verfahren und Vorrichtung zum Überführen von Schüttgut von einem Vorratsbehälter in einen mehrere getrennte Behälterteile aufweisenden Arbeitsbehälter**
Method and device for transferring bulk material from a storage vessel into a working container having multiple separate container sections
Procédé et dispositif pour transférer un produit en vrac d'un réservoir de stockage dans un réservoir de travail présentant plusieurs parties de réservoir séparées

(30) Priorität: 03.08.2012 DE 102012015218
(43) Veröffentlichungstag der Anmeldung: 05.02.2014
(73) Patentinhaber: RAUCH Landmaschinenfabrik GmbH, 76547 Sinzheim (DE)
(72) Erfinder: Rauch, Norbert, Dr., D-76547 Sinzheim (DE); Speth, Fritz, D-76547 Sinzheim (DE); Fritz, Sascha, D-77830 Bühlertal (DE); Zeitvogel, Thomas, 77836 Rheinmünster (DE)
(74) Vertreter: Lichti - Patentanwälte Partnerschaft mbB

(56) Entgegenhaltungen:
- GB-A- 2 172 483
- US-A1- 2010 124 958

## Beschreibung

Die Erfindung betrifft ein Verfahren zum Überführen von pulver- oder partikelförmigem Schüttgut, insbesondere Streugut, von einem Vorratsbehälter in einen wenigstens zwei voneinander getrennte Behälterteile aufweisenden Arbeitsbehälter, wobei das Schüttgut aus dem unteren Bereich eines jeweiligen Behälterteils des Arbeitsbehälters mittels je eines getrennt voneinander steuerbaren Dosierorgans aus dem jeweiligen Behälterteil ausgebracht wird, wobei das Schüttgut aus einer Auslassöffnung des Vorratsbehälters mittels einer den voneinander getrennten Behälterteilen gemeinsamen Fördereinrichtung gefördert und über einen, einem jeweiligen Behälterteil zugeordneten Auslass dem jeweiligen Behälterteil von oben aufgegeben wird. Die Erfindung bezieht sich ferner auf eine insbesondere zur Durchführung eines solchen Verfahrens geeignete Vorrichtung zum Überführen von pulver- oder partikelförmigem Schüttgut, insbesondere Streugut, von einem Vorratsbehälter in einen wenigstens zwei voneinander getrennte Behälterteile aufweisenden Arbeitsbehälter. Derartige Vorrichtungen sind bekannt und beispielsweise unter dem Handelsnamen "Großflächenstreuer TWS 7000" bei der Anmelderin kommerziell erhältlich. Sie finden überall dort ihren Einsatz, wo es darum geht, pulver- oder partikelförmige Streugüter mehr oder minder flächig auf dem Boden zu verteilen, wie z.B. in der Landwirtschaft oder im Rahmen des Winterdienstes. Letztere Aufgabe übernimmt üblicherweise ein Streugerät, z.B. ein Dünger- oder Winterdienststreugerät, welches einen Arbeitsbehälter mit zwei voneinander getrennten Behälterteilen aufweist, welche jeweils im Bereich ihrer Unterseiten mit einem Auslauf ausgestattet sind, welcher mit je einem getrennt voneinander steuerbaren Dosierorgan versehen ist, um das Schüttgut in der jeweils erforderlichen Menge aus dem jeweiligen Behälterteil auszubringen. Unterhalb der Dosierorgane ist üblicherweise je ein Verteilorgan angeordnet, welches von einer insbesondere mit Streuschaufeln bestückten Verteilerscheibe gebildet sein kann, wobei die Verteilerscheibe gegensinnig in Rotation versetzt werden können.

Da das Aufnahmevermögen des Arbeitsbehälters in aller Regel begrenzt ist, ist es häufig erwünscht, das auszubringende Streugut in einem während der Streuarbeit mitgeführten Vorratsbehälter auf Vorrat zu halten, welcher üblicherweise auf einem fahrbaren Chassis angeordnet ist, wie beispielsweise an einem an einen Traktor kuppelbaren Anhänger. Das mit dem Arbeitsbehälter ausgestattete Streugerät selbst wird dann mit dem den Vorratsbehälter tragenden Chassis gekoppelt, wobei das in dem Vorratsbehälter befindliche Streugut aus diesem mittels einer, einer Auslassöffnung des Vorratsbehälters nachgeordneten Fördereinrichtung in den Arbeitsbehälter - oder genauer: in die beiden getrennten Behälterteilen des Arbeitsbehälters - mehr oder minder kontinuierlich überführt wird. Dies geschieht üblicherweise derart, dass das der Auslassöffnung des Vorratsbehälters abgewandte Ende der Fördereinrichtung oberhalb des Arbeitsbehälters des Streugerätes angeordnet ist und je einen, oberhalb eines jeweiligen Behälterteils des Arbeitsbehälters angeordneten Auslass aufweist, so dass das aus dem Vorratsbehälter geförderte Schüttgut von oben in die jeweiligen Behälterteile des Arbeitsbehälters fällt. Die einem jeden Behälterteil zugewandten Auslässe sind dabei in der Regel an den Enden einer etwa gabelförmigen Abzweigleitung angeordnet, deren zentrale, in die beiden Abzweigleitungen mündende Zuführleitung mit der Fördereinrichtung in Verbindung steht. Auf diese Weise wird den beiden Behälterteilen des Arbeitsbehälters stets im Wesentlichen dieselbe Menge an Streugut aufgegeben.

Indes ist es häufig der Fall, dass das Streugut mittels unterschiedlicher Öffnungsstellungen der Dosierorgane mit verschiedenen Massen- bzw. Volumenströmen aus den Behälterteilen des Arbeitsbehälters ausgebracht werden muss, so dass der Verbrauch an Streugut in dem einen Behälterteil ein anderer ist als in dem anderen Behälterteil. Exemplarisch sei in diesem Zusammenhang auf das sogenannte Randstreuen verwiesen, bei welchem der Landwirt mit seinem Streugerät entlang einer Grenzfahrgasse zunächst den Feldrand mit Streugut versieht, bevor er das Streugut anlässlich des Befahrens paralleler Feldfahrgassen auf das Feldinnere aufbringt. Im erstgenannten Fall kann es aufgrund rechts und links verschiedener Volumenströme an Streugut zu einem sehr unterschiedlichen Befüllungsgrad der beiden Behälterteile bis hin zu einem gänzlichen Entleeren desjenigen Behälterteils kommen, auf welchem mittels des Dosierorgans das meiste Streugut auf das zugehörige Verteilorgan überführt und von dort verteilt wird. Zugleich läuft das anderer Behälterteil aufgrund fortwährender Förderung weiteren Streugutes aus dem Vorratsbehälter Gefahr überzulaufen.

Die GB 2 172 483 A beschreibt eine Vorrichtung zur Überführung von Streugut von einem Vorratsbehälter in den Arbeitsbehälter einer Streueinrichtung, welcher ein Dosierorgan mit diesem zugeordneten Verteilorgan aufweist, mittels einer als Schneckenförderer ausgebildeten Fördereinrichtung. Der Arbeitsbehälter umfasst zwei getrennte Kammern, , welche gemeinsam von der Fördereinrichtung mit Streugut versorgt sind. Die Auslassöffnung des Vorratsbehälters ist mit einem verschieblichen Absperrorgan versehen, welches verschlossen wird, sobald der Füllstand an Streugut in dem gesamten Arbeitsbehälter ein Maximum erreicht hat. Ein solches Maximum wird mittels Wiegesensoren detektiert, welche das Gewicht des gesamten Arbeitsbehälters zu erfassen vermögen. Indes ist auch hier nur eine gemeinsame Versorgung beider Kammern des Arbeitsbehälters mit demselben Streugutstrom aus der gemeinsamen Fördereinrichtung möglich, wobei nach Erreichen eines bestimmten Maximalgewichtes des gesamten Arbeitsbehälters der Vorratsbehälter komplett von der Fördereinrichtung getrennt wird.

Aus der DE 197 48 179 A1 ist eine weitere Vorrichtung zur Überführung von Streugut aus zwei voneinander getrennten Vorratstanks eines Vorratsbehälters in zwei voneinander getrennte Behälterteile eines Arbeitsbehälters, welcher zwei Dosierorgane mit diesen zugeordneten Verteilorganen, umfasst, mittels je einer separaten Fördereinrichtung in Form je eines Schneckenförderers bekannt. Hierbei mündet von der Unterseite eines jeden Vorratstanks je eine Förderschnecke in die jeweiligen Behälterteile des Arbeitsbehälters, wobei je ein endständiges Leitelement der beiden Fördereinrichtungen, welches den geförderten Streugutstrom in zwei Teilströme aufteilt und zur gleichmäßigeren Querverteilung des Streugutes in einem jeweiligen Behälterteil des Arbeitsbehälters quer zur Fahrtrichtung dient, derart verstellbar sein kann, dass die beiden Förderschnecken nur einem oder beiden Behälterteilen das Streugut aufgeben. Die Behälterteile sind mit Füllstandssensoren ausgestattet, deren Signale erforderlichenfalls zur Abschaltung des jeweiligen Antriebs der jeweiligen Fördereinrichtung führen. Indes ist die Ausgestaltung der Vorrichtung mit zwei separaten Fördereinrichtungen und mit deren getrennten Antrieben wirkverbundenen Sensoren aufwändig und teuer.

Aus der US20100124958 ist eine weitere Vorrichtung zur Überführung von Streugut bekannt. Der Erfindung liegt die Aufgabe zugrunde, ein Verfahren und eine Vorrichtung zum Überführen von pulver- oder partikelförmigem Schüttgut, insbesondere Streugut, von einem Vorratsbehälter in einen wenigstens zwei voneinander getrennte Behälterteile aufweisenden Arbeitsbehälter der eingangs genannten Art dahingehend weiterzubilden, um den vorgenannten Nachteilen auf einfache und kostengünstige Weise zu begegnen.

In verfahrenstechnischer Hinsicht wird diese Aufgabe bei einem Verfahren der eingangs genannten Art dadurch gelöst, dass zumindest ein vorherbestimmtes Maximum des Befüllungsgrades an Schüttgut in einem jeweiligen Behälterteil erfasst und, sobald der Befüllungsgrad eines Behälterteils das vorherbestimmte Maximum erreicht hat, der diesem Behälterteil zugeordnete Auslass selbsttätig blockiert und das Schüttgut nur noch wenigstens einem anderen Behälterteil, dessen Befüllungsgrad geringer ist als das vorherbestimmte Maximum, über den diesem zugeordneten Auslass aufgegeben wird.

In vorrichtungstechnischer Hinsicht sieht die Erfindung zur Lösung dieser Aufgabe ferner eine Vorrichtung vor, welche gekennzeichnet ist durch
- eine einem jeweiligen Behälterteil des Arbeitsbehälters zugeordnete Befüllungsgrad-Erfassungseinrichtung, welche zum Erfassen eines vorherbestimmten Maximums des Befüllungsgrades eines jeweiligen Behälterteils ausgebildet ist, und
- eine der Befüllungsgrad-Erfassungseinrichtung zugeordnete Blockiereinrichtung, welche zum Blockieren des demjenigen Behälterteil, in welchem die Befüllungsgrad-Erfassungseinrichtung das Maximum des Befüllungsgrades identifiziert hat, zugeordneten Auslasses ausgebildet ist, während sie den/die Auslass/Auslässe des-/derjenigen Behälterteils/-teile, in welchem/welchen die Befüllungsgrad-Erfassungseinrichtung kein Maximum des Befüllungsgrades identifiziert hat, freilässt.

Die erfindungsgemäße Ausgestaltung stellt einerseits eine zuverlässige Nachlieferung an Schütt- bzw. Streugut mittels einer einzigen, den Behälterteilen des Arbeitsbehälters gemeinsamen Fördereinrichtung in dasjenige Behälterteil des Arbeitsbehälters sicher, aus welchem ein relativ großer Volumenstrom ausgebracht werden muss, während andererseits sichergestellt ist, dass das andere oder die anderen Behälterteil(e) aufgrund nachgelieferten Schüttgutes nicht überlaufen, indem der diesem Behälterteil zugeordnete Auslass selbsttätig blockiert wird, sobald dort das vorherbestimmte Maximum des Befüllungsgrades erreicht worden ist. Folglich ist es beispielsweise einem Landwirt anlässlich der Verteilung von Streugut auf einem Feld möglich, die Dosierorgane des Arbeitsbehälters mit beliebig unterschiedlichen Öffnungsstellungen anzusteuern und dabei verschiedenen Streuparametern Rechnung zu tragen, ohne dass er einer gleichmäßigen Überführung des Streugutes in die Behälterteile des Arbeitsbehälters Rechnung tragen muss, indem er beispielsweise in regelmäßigen Abständen aussteigt, die jeweiligen Füllstandniveaus kontrolliert und einen jeweiligen Auslass erforderlichenfalls manuell verschließt, wie es bei dem Stand der Technik der Fall ist.

In vorteilhafter Ausgestaltung des erfindungsgemäßen Verfahrens kann vorgesehen sein, dass die Fördereinrichtung angehalten und/oder die Auslassöffnung des Vorratsbehälters geschlossen wird, sobald der Befüllungsgrad eines jeden Behälterteils das vorherbestimmte Maximum erreicht hat. Auf diese Weise wird sichergestellt, dass von dem Vorratsbehälter überhaupt kein Schüttgut mehr in den Arbeitsbehälter überführt wird, sobald alle seiner Behälterteile den maximalen Befüllungsgrad erreicht haben. Dies kann insbesondere dann der Fall sein, wenn aus allen Behälterteilen des Arbeitsbehälters ein gegenüber der Fördermenge der Fördereinrichtung nur kleiner Massenstrom an Streugut ausgebracht werden soll. In diesem Zusammenhang ist es folglich grundsätzlich möglich, dass
- lediglich die den Behälterteilen des Arbeitsbehälters gemeinsame Fördereinrichtung abgeschaltet und stillgesetzt wird, so dass die Auslassöffnung des Vorratsbehälters nicht notwendigerweise verschließbar sein muss; oder
- im Falle einer verschließbaren Auslassöffnung des Vorratsbehälters lediglich die Auslassöffnung verschlossen wird; oder
- sowohl die Auslassöffnung verschlossen als auch die Fördereinrichtung stillgesetzt wird,
wobei es insbesondere aus den nachfolgend genannten Gründen von Vorteil sein kann, wenn die Auslassöffnung des Vorratsbehälters bedarfsweise geschlossen werden kann.

In vorrichtungstechnischer Hinsicht kann zu diesem Zweck vorzugsweise vorgesehen sein, dass die Auslassöffnung des Vorratsbehälters mittels eines Aktuators verschließbar ist, wobei der Aktuator mit der Befüllungsgrad-Erfassungseinrichtung wirkverbunden ist und die Auslassöffnung verschließt, sobald die Befüllungsgrad-Erfassungseinrichtung das vorherbestimmte Maximum des Befüllungsgrades in jedem Behälterteil des Arbeitsbehälters identifiziert hat. Der Aktuator kann dabei beliebiger bekannter Art, beispielsweise mechanisch, hydraulisch, pneumatisch oder hydropneumatisch, sein und beispielsweise eine Verschlussklappe der Auslassöffnung betätigen.

In diesem Zusammenhang kann es zweckmäßig sein, wenn die Fördereinrichtung nach dem Verschließen der Auslassöffnung des Vorratsbehälters leer gefördert wird, um eine Beschädigung der Fördereinrichtung beim erneuten Anfahren derselben im gefüllten Zustand zu verhindern. Diesbezüglich sei exemplarisch darauf hingewiesen, dass es im Falle einer eine oder mehrere Förderschnecken aufweisenden Fördereinrichtung zu einer Überlastung des Antriebs kommen kann, wenn die Schneckengänge beim Anfahren der Schnecke mit Schüttgut befüllt sind, weil die dann zu überwindende Haftung des Schüttgutes um ein Vielfaches größer ist als die bei der mehr oder minder kontinuierlichen Förderung auftretende Gleitreibung. Bei einer hierzu in der Lage befindlichen Vorrichtung kann vorteilhafterweise vorgesehen sein, dass ein Antrieb der Fördereinrichtung mit der Befüllungsgrad-Erfassungseinrichtung und/oder mit dem Aktuator der Auslassöffnung des Vorratsbehälters wirkverbunden ist, wobei der Antrieb die Fördereinrichtung leerfördert, nachdem die Befüllungsgrad-Erfassungseinrichtung das vorherbestimmte Maximum des Befüllungsgrades in jedem Behälterteil des Arbeitsbehälters identifiziert hat und/oder nachdem der Aktuator die Auslassöffnung des Vorratsbehälters zugesteuert hat. Ein solcher Nachlauf der Fördereinrichtung kann einerseits beispielsweise sensorisch gesteuert sein, indem ein z.B. stromab der Fördereinrichtung platzierter Sensor erkennt, wenn kein Schüttgut mehr gefördert wird, oder der Nachlauf kann vorzugsweise lediglich über eine, insbesondere mit einem Sicherheitsfaktor beaufschlagte, Nachlaufzeit vonstatten gehen, nach welcher sichergestellt ist, dass die Fördereinrichtung entleert worden ist. Im Falle von Förderschnecken ist z.B. freilich auch ein Nachlauf mit einer bestimmten Anzahl von Umdrehungen möglich, welcher ebenfalls sicherstellt, dass die Schnecke gänzlich entleert worden ist.

Sofern eine solche Leerförderung der Fördereinrichtung im Anschluss an das Verschließen der Auslassöffnung des Vorratsbehälters angedacht ist, kann es sich insbesondere dann, wenn die stromab der Fördereinrichtung in die Behälterteile des Arbeitsbehälters mündenden Auslässe blockiert worden sind, anbieten, dass der nach Verschließen der Auslassöffnung des Vorratsbehälters in der Fördereinrichtung befindliche Rest an Schüttgut über wenigstens einen den Auslässen der Behälterteile des Arbeitsbehälters zugeordneten Überlauf wenigstens einem oder sämtlichen Behälterteilen aufgegeben wird. Der maximale Befüllungsgrad eines jeden Behälterteils sollte in diesem Fall derart gewählt werden, dass die Behälterteile jedenfalls eine solche Restmenge an Schüttgut noch aufzunehmen vermögen. In vorrichtungstechnischer Hinsicht kann den Auslässen der Behälterteile zu diesem Zweck ein, insbesondere oberhalb derselben angeordneter, Überlauf zugeordnet sein, um den von der Fördereinrichtung geförderten Rest an Schüttgut wenigstens einem oder sämtlichen Behälterteilen aufzugeben.

In Bezug auf die erfindungsgemäße Erfassung des Befüllungsgrades an Schüttgut eines jeweiligen Behälterteils und die selbsttätige Blockierung des einem jeweiligen Behälterteil zugeordneten Auslasses, sobald der Befüllungsgrad dieses Behälterteils sein Maximum erreicht hat, sowie auf die fortwährende Überführung an Schüttgut in diejenigen Behälterteile, deren Befüllungsgrad (noch) geringer ist als das vorherbestimmte Maximum, kann gemäß einer ersten Ausführungsvariante des Verfahrens vorgesehen sein, dass der Befüllungsgrad eines jeweiligen Behälterteils des Arbeitsbehälters sensorisch erfasst wird, wobei der Auslass eines jeweiligen Behälterteils, dessen Befüllungsgrad sensorisch als das vorherbestimmte Maximum identifiziert worden ist, aktuatorisch geschlossen wird.

Bei einer hierfür geeigneten Vorrichtung kann demgemäß die Befüllungsgrad-Erfassungseinrichtung je einen, einem jeweiligen Behälterteil zugeordneten Füllstandssensor aufweisen, während die hiermit wirkverbundene Blockiereinrichtung je einen, einem jeweiligen Auslass zugeordneten Aktuator aufweisen kann, welcher den jeweiligen Auslass verschließt, in dessen zugehörigem Behälterteil der Füllstandssensor der Befüllungsgrad-Erfassungseinrichtung das vorherbestimmte Maximum des Befüllungsgrades identifiziert hat. Ein solcher Aktuator kann wiederum beliebiger bekannter Art, beispielsweise mechanisch, hydraulisch, pneumatisch oder hydropneumatisch, sein und beispielsweise eine Verschlussklappe des jeweiligen Auslasses betätigen.

Gemäß einer zweiten, alternativen Ausführungsvariante des erfindungsgemäßen Verfahrens kann stattdessen vorgesehen sein, dass der Auslass eines jeweiligen Behälterteils, dessen Befüllungsgrad das vorherbestimmte Maximum erreicht hat, durch gestautes Schüttgut blockiert wird, In diesem Fall wird der Befüllungsgrad eines jeweiligen Behälterteils des Arbeitsbehälters demnach mechanisch erfasst und wird der Auslass eines jeweiligen Behälterteils, dessen Befüllungsgrad mechanisch als das vorherbestimmte Maximum identifiziert worden ist, durch gestautes Schüttgut blockiert. Bei einer solchen Ausführungsvariante sind folglich sowohl entsprechende Sensoren als auch Aktuatoren zum Verschließen von den Auslässen zugeordneten Verschlussorganen entbehrlich, so dass letzterer Ausführungsvariante in vielen Fällen aufgrund ihrer hohen Wirtschaftlichkeit der Vorzug gegeben werden kann. Erfindungsgemäß ist vorgesehen, dass die Behälterteile des Arbeitsbehälters mit je einer von oben auf die Behälterteile zu führenden oder in diese hineinragenden Leitung mit dem an deren freien Ende angeordnetem Auslass versehen werden, wobei die Leitung an ihren den Behälterteilen zugewandten, freien Enden entgegengesetzten Enden miteinander verbunden sind, wobei das Schüttgut aus dem Vorratsbehälter in diesen Verbindungsbereich hinein gefördert wird, so dass das Schüttgut in derjenigen Leitung, welche dem einen Behälterteil zugeordnet ist, welches den vorherbestimmten maximalen Befüllungsgrad erreicht hat, bis in den Verbindungsbereich mit wenigstens einer weiteren, einem anderen Behälterteil zugeordneten Leitung gestaut wird, so dass der dem einen Behälterteil zugeordnete Auslass folglich blockiert und das Schüttgut nur noch über die andere(n) Leitung(en) mit dem/den anderen Auslass/Auslässen in das/die andere(n) Behälterteil(e) überführt wird. Die Leitungen können dabei von Rohren, Schläuchen oder dergleichen gebildet sein. Im Falle des Erreichens eines maximalen Befüllungsgrades eines Behälterteils des Arbeitsbehälters steht das hierin befindliche Schüttgut folglich von unten gegen den am freien Ende der jeweiligen Leitung angeordneten Auslass an, staut sich in der jeweiligen Leitung bis zu deren Abzweig im Verbindungsbereich mit dem in den anderen (oder mit den in die anderen) Behälterteile führenden Leitung(en), so dass das Schüttgut diese Leitung blockiert, während es in das/die anderen Behälterteil(e) durch deren Leitung nach wie vor zu gelangen vermag. Erfindungsgemäß ist vorgesehen, dass die Befüllungsgrad-Erfassungseinrichtung und die Blockiereinrichtung eine gemeinsame Einheit bilden, wobei diese Einheit je eine von oben auf die Behälterteile des Arbeitsbehälters zu führende oder in diese hineinragende Leitung mit dem an deren freien Ende angeordneten Auslass aufweist, wobei die Leitungen an ihren den Behälterteilen zugewandten, freien Enden entgegengesetzten Enden miteinander verbunden sind und dieser Verbindungsbereich, insbesondere über eine Abzweigleitung, mit der Fördereinrichtung verbunden ist, um das Schüttgut in derjenigen Leitung, welche dem einen Behälterteil zugeordnet ist, welches den vorherbestimmten maximalen Befüllungsgrad erreicht hat, bis in den Verbindungsbereich mit wenigstens einer weiteren, einem anderen Behälterteil zugeordneten Leitung zu stauen und auf diese Weise den dem einen Behälterteil zugeordneten Auslass zu blockieren und das Schüttgut nur noch über die andere(n) Leitung(en) mit dem/den anderen Auslass/Auslässen in das/die andere(n) Behälterteil(e) zu überführen. Der an dem freien Ende der beispielsweise in Form eines einfachen Rohres oder Schlauches ausgebildeten Leitung befindliche Auslass kann dabei vorzugsweise etwa oberhalb dem Dosierorgan des jeweiligen Behälterteils angeordnet sein, um die Spitze des Füllkegels an Schüttgut in dem jeweiligen Behälterteil zu "treffen". Wie bereits angedeutet, kann es insbesondere zweckmäßig sein, wenn das Erreichen des vorherbestimmten maximalen Befüllungsgrades in sämtlichen Behälterteilen des Arbeitsbehälters sensorisch erfasst wird, um die Auslassöffnung des Vorratsbehälters zu verschließen und/oder auch nur die Fördereinrichtung stillzusetzen und somit eine Nachlieferung an Schüttgut in den gänzlich befüllten Arbeitsbehälter zu verhindern. Die Befüllungsgrad-Erfassungseinrichtung kann hierzu ferner einen, insbesondere separaten, Sensor aufweisen, um das Erreichen des vorherbestimmten Befüllungsgrades in sämtlichen Behälterteilen des Arbeitsbehälters sensorisch zu erfassen, wobei im Falle der oben erläuterten ersten Ausführungsvariante der Erfindung selbstverständlich auch die einem jeden Behälterteil des Arbeitsbehälters zugeordneten Sensoren diese Funktion erfüllen können. Es kann indes zweckmäßig sein, dass die sensorische Erfassung eines maximalen Befüllungsgrades sämtlicher Behälterteile des Arbeitsbehälters mittels eines im oder stromauf des Verbindungsbereiches der Leitungen angeordneten Sensors geschieht, mittels welchem dort angestautes Schüttgut identifiziert wird. Eine entsprechende Vorrichtung kann sich dadurch auszeichnen, dass die aus der Befüllungsgrad-Erfassungseinrichtung und der Blockiereinrichtung gebildete Einheit einen im oder stromauf des Verbindungsbereiches der in die Behälterteile des Arbeitsbehälters mündenden Leitungen angeordneten Sensor aufweist, um dort angestautes Schüttgut zu identifizieren. Bei dem Sensor kann es grundsätzlich um einen beliebigen, zur Erkennung eines Vorhandenseins an Schüttgut geeigneten Sensor handeln, wie beispielsweise um einen optischen, kapazitiven, Ultraschallsensor oder dergleichen.

Wie bereits angedeutet, kann die den voneinander getrennten Behälterteilen des Arbeitsbehälters gemeinsame Fördereinrichtung vorzugsweise von einem Schneckenförderer gebildet sein, wobei selbstverständlich auch beliebige andere Fördereinrichtungen in Betracht kommen, wie beispielsweise ein umlaufendes Förderband.

Wie ebenfalls bereits angedeutet, können der Vorratsbehälter und die diesem zugeordnete Fördereinrichtung auf einem fahrbaren Chassis, wie einem Anhänger oder einem motorisch angetriebenen Fahrzeug, angeordnet sein, wobei der Arbeitsbehälter mit den Behälterteilen und den diesen zugeordneten Dosierorganen insbesondere mit dem Chassis koppelbar ist. Der Arbeitsbehälter mit den Dosier- und gegebenenfalls Verteilorganen kann insbesondere Teil eines separaten Streugerätes der eingangs genannten Art sein, welches nicht notwendigerweise nur in Verbindung mit dem Vorratsbehälter und der diesem zugeordneten Fördereinrichtung Verwendung finden kann. Demgemäß kann es sich bei einer vorteilhaften Ausgestaltung bei dem Vorratsbehälter um ein Streugutreservoir handeln, während es sich bei dem Arbeitsbehälter um den Arbeitsbehälter eines Streugutverteilers, insbesondere in Form eines Zweischeibenstreuers, handeln kann.

Weitere Merkmale und Vorteile der Erfindung ergeben sich aus der nachfolgenden Beschreibung eines vorteilhaften Ausführungsbeispiels unter Bezugnahme auf die Zeichnungen. Dabei zeigen:
- Fig. 1: eine Seitenansicht einer Ausführungsform einer erfindungsgemäßen Vorrichtung zum Überführen von Schüttgut von einem Vorratsbehälter in einen zwei voneinander getrennte Behälterteile aufweisenden Arbeitsbehälter;
- Fig. 2: eine Seitenansicht der Vorrichtung gemäß Fig. 1 in Richtung des Pfeils II der Fig. 1 betrachtet;
- Fig. 3: eine perspektivische Detailansicht der eine Einheit bildenden Befüllungsgrad-Erfassungseinrichtung und Blockiereinrichtung der Vorrichtung gemäß Fig. 1 und 2;
- Fig. 4: eine Draufsicht auf die Einheit gemäß Fig. 3 von vorne;
- Fig. 5: eine Draufsicht auf die Einheit gemäß Fig. 3 und 4 von hinten;
- Fig. 6: eine Detailansicht des Arbeitsbehälters gemäß Fig. 1 und 2 mit der Einheit gemäß Fig. 3 bis 5 in einem Zustand etwa gleicher Befüllungsgrade seiner Behälterteile kurz vor Erreichen des maximalen Befüllungsgrades;
- Fig. 7: eine der Fig. 6 entsprechende Detailansicht in einem Zustand verschiedener Befüllungsgrade der Behälterteile des Arbeitsbehälters, wobei das linke Behälterteil kurz vor Erreichen seines maximalen Befüllungsgrades steht;
- Fig. 8: eine der Fig. 6 und 7 entsprechende Detailansicht in einem Zustand, in welchem beide Behälterteile des Arbeitsbehälters ihren maximalen Befüllungsgrad erreicht haben;
- Fig. 9: eine der Fig. 6 bis 8 entsprechende Detailansicht in einem Zustand, in welchem anlässlich des Entleerens der Fördereinrichtung ein Rest an Schüttgut in der Arbeitsbehälter überführt wird; und
- Fig. 10: eine von der Seite betrachtete Detailansicht des zur Überführung des Restes an Schüttgut gemäß Fig. 9 vorgesehenen Überlaufes.

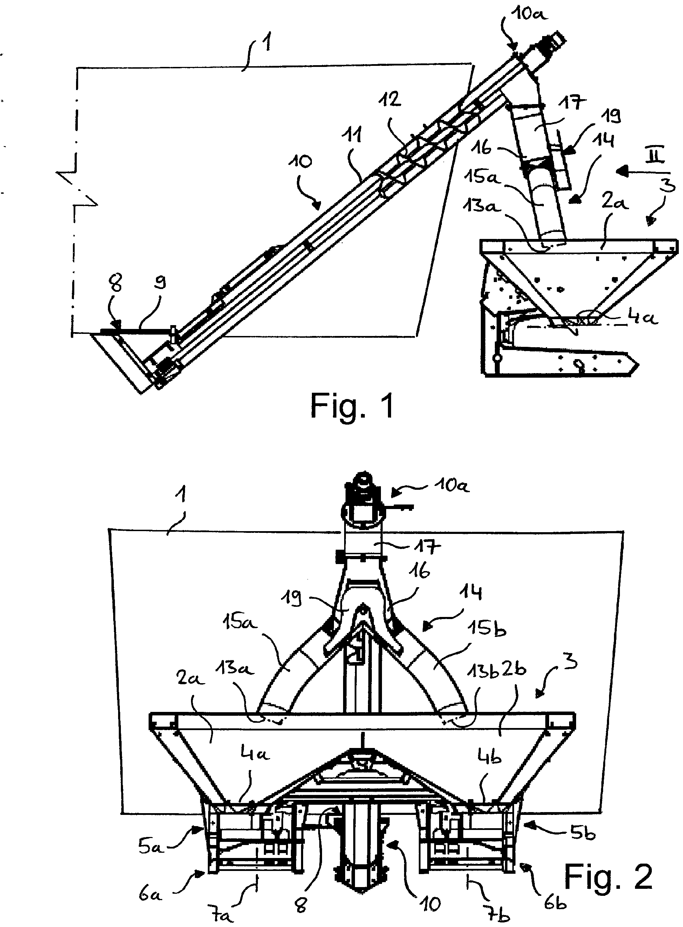

In Fig. 1 und 2 ist eine Vorrichtung zum Überführen von pulver- oder partikelförmigem Schüttgut in Form von Streugut, wie beispielsweise Mineraldünger, von einem als Streugutreservoir dienenden Vorratsbehälter 1 in einen zwei voneinander getrennte Behälterteile 2a, 2b (siehe Fig. 2) aufweisenden Arbeitsbehälter 3 wiedergegeben. Der Vorratsbehälter 1 ist dabei insbesondere auf einem (nicht dargestellten) fahrbaren Chassis angeordnet, wie beispielsweise einem an eine landwirtschaftliche Zugmaschine bzw. an einen Traktor ankuppelbaren Anhänger. Bei dem Arbeitsbehälter 3 handelt es sich im vorliegenden Fall um den Arbeitsbehälter eines Streugutverteilers, insbesondere in Form eines Zweischeibenstreuers, welcher mit dem Chassis (nicht gezeigt) des Vorratsbehälters 1 koppelbar ist. Hierzu kommen herkömmliche Kopplungseinrichtungen (ebenfalls nicht gezeigt) in Betracht, wie sie üblicherweise zum Koppeln eines derartigen Streugutverteilers unmittelbar an einen Traktor zum Einsatz kommen. Der Streugutverteiler ist gleichfalls herkömmlicher Bauart und weist je einen im Bereich der Unterseiten der beiden sich im Wesentlichen trichterförmig nach unten verjüngenden Behälterteile 2a, 2b des Arbeitsbehälters 3 angeordneten Auslauf 4a, 4b auf (siehe Fig. 2). Jeder Auslauf 4a, 4b ist mit einem getrennt voneinander steuerbaren Dosierorgan 5a, 5b (Fig. 2) ausgestattet, um die Ausläufe 4a, 4b je nach gewünschtem Streubild und in Abhängigkeit der Fahrgeschwindigkeit, der Flugeigenschaften des Streugutes etc. individuell auf- und zusteuern zu können. Wiederum unterhalb der Dosierorgane 5a, 5b befinden sich die Verteilorgane 6a, 6b zur gleichmäßigen Verteilung des Streugutes auf dem Boden, welche beim vorliegenden Ausführungsbeispiel von mit Verteilerschaufeln ausgestatteten, um je eine senkrechte Achse 7a, 7b, drehangetriebenen Verteilerscheiben gebildet sind.

Wie insbesondere der Fig. 1 zu entnehmen ist, ist der zur Bevorratung des Streugutes dienende Vorratsbehälter 1 in seinem Bodenbereich mit einer Auslassöffnung 8 ausgestattet, welche mit einer aktuatorisch betätigbaren Verschlussklappe 9 versehen ist, um die Auslassöffnung 8 bedarfsweise zu verschließen. Die Auslassöffnung 8 mündet in eine einzige, dem Vorratsbehälter 1 nachgeordnete und beiden Behälterteilen 2a, 2b des Arbeitsbehälters gemeinsame Fördereinrichtung 10, welche zur Überführung des Streugutes aus dem Vorratsbehälter 1 in die beiden Behälterteile 2a, 2b dient und ebenso wie der Vorratsbehälter 1 selbst auf dessen fahrbarem Chassis (nicht dargestellt) angeordnet ist. Die Fördereinrichtung 10 ist im vorliegenden Fall von einem Schneckenförderer gebildet und weist demgemäß eine in einem Förderrohr 11 drehangetriebene Schnecke 12 auf. Die Fördereinrichtung 10 erstreckt sich von unterhalb der Auslassöffnung 8 des Vorratsbehälters 1 schräg nach oben, so dass ihr der Auslassöffnung 8 abgewandtes Ende 10a etwa oberhalb des an das (nicht gezeigte) Chassis angekoppelten Arbeitsbehälters 3 des Streugutverteilers angeordnet ist, um dem Arbeitsbehälter 3 das geförderte Streugut von oben unter Gravitationswirkung aufzugeben. Zu diesem Zweck ist das obere Ende 10a der Fördereinrichtung 10 mit je einem, unmittelbar oberhalb eines jeweiligen Behälterteils 2a, 2b des gekoppelten Arbeitsbehälters 3 angeordneten Auslass 13a, 13b verbunden (vgl. insbesondere Fig. 2).

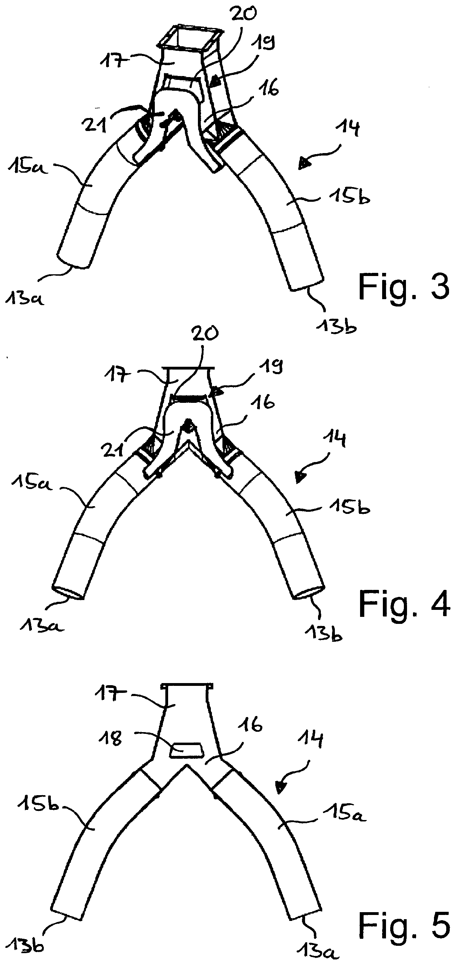

Wie insbesondere aus Fig. 3 bis 5 ersichtlich, schließt sich an das Ende 10a der Fördereinrichtung eine Befüllungsgrad-Erfassungseinrichtung zum Erfassen eines vorherbestimmten Maximums des Befüllungsgrades eines jeweiligen Behälterteils 2a, 2b des Arbeitsbehälters 3 sowie eine Blockiereinrichtung zum Blockieren des Auslasses 13a, 13b desjenigen Behälterteils 2a, 2b, in welchem die Befüllungsgrad-Erfassungseinrichtung das Maximum des Befüllungsgrades identifiziert hat, unter Freilassung des anderen Behälterteils 2b, 2a, in welchem ein solcher maximaler Befüllungsgrad (noch) nicht erreicht worden ist, an. Die Befüllungsgrad-Erfassungseinrichtung sowie die Blockiereinrichtung sind beim vorliegenden Ausführungsbeispiel von einer gemeinsamen Einheit 14 gebildet, welche je eine von oben auf die Behälterteile 2a, 2b des Arbeitsbehälters 1 zu führende bzw. - wie es beim vorliegenden Ausführungsbeispiel der Fall ist - zumindest geringfügig in diese hineinragenden Leitung 15a, 15b aufweist, den deren freiem, unterem Ende sich der jeweilige Auslass 13a, 13b für das geförderte Streugut befindet. An ihrem dem jeweiligen unteren, mit dem jeweiligen Auslass 13a, 13b versehenen Ende entgegengesetzten (oberen) Ende münden die beiden Leitungen 15a, 15b in einen sie miteinander verbindenden Verbindungsbereich 16, welcher wiederum mittels einer nach oben von dem Verbindungsbereich 16 fort führenden Abzweigleitung 17 an das obere Ende 10a der Fördereinrichtung 19 angeschlossen ist. Sowohl die Leitungen 15a, 15b, welche sich im vorliegenden Fall von ihrem Verbindungsbereich 16 im Wesentlichen in Form eines auf dem Kopf stehenden "U" oder "V" nach unten erstrecken, als auch die Abzweigleitung 17 können von herkömmlichen Rohren gebildet sein.

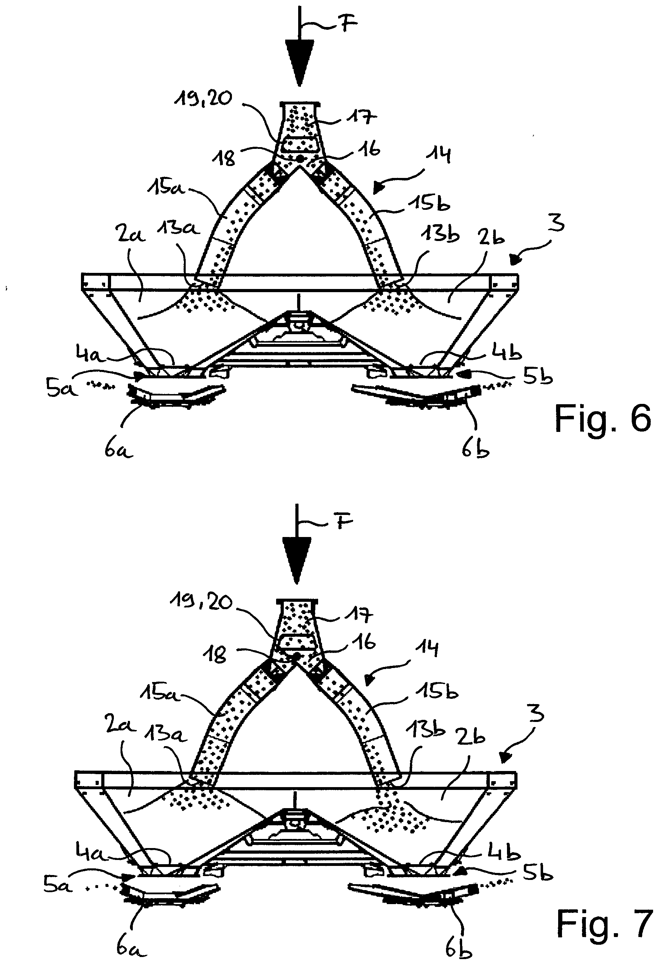

Die die Befüllungsgrad-Erfassungseinrichtung und die Blockiereinrichtung bildende Einheit 14 macht es auf diese Weise möglich, dass ein maximaler Befüllungsgrad in einem jeweiligen Behälterteil 2a, 2b des Arbeitsbehälters 3 rein mechanisch erfasst wird, indem - wie insbesondere weiter unten unter Bezugnahme auf die Fig. 7 noch besser ersichtlich - das Streugut in derjenigen Leitung 15a, 15b, bei welcher der Füllkegel des Streugutes in dem zugehörigen Behälterteil 2a, 2b bis an deren Auslass 13a, 13b ansteht und das Behälterteil 2a, 2b folglich seinen maximalen Befüllungsgrad erreicht hat, bis in den Verbindungsbereich 16 mit der anderen, in das andere Behälterteil 2b, 2a mündenden Leitung 15b, 15a zu stauen. Der gewünschte maximale Befüllungsgrad kann dabei, sofern gewünscht, durch Höhenverlagerung der in diesem Fall insbesondere vertikal verschieblichen Einheit 14 (z.B. infolge einer nicht dargestellten Teleskopierbarkeit der Abzweigleitung 17 in Bezug auf eine unmittelbar in das obere Ende 10a der Fördereinrichtung 19 führende, stationäre Leitung) eingestellt werden. Darüber hinaus wird der zugehörige Auslass 13a, 13b der jeweiligen Leitung 15a, 15b rein mechanisch durch das dort aufgestaute Streugut blockiert, so dass das gesamte, über die Fördereinrichtung 10 geförderte Streugut nunmehr nur noch über die andere Leitung 15b, 15a und deren Auslass 15b, 15a in das andere Behälterteil 2b, 2a gelangen kann.

Die Befüllungsgrad-Erfassungseinrichtung der Einheit 14 ist darüber hinaus mit einem Sensor 18 (Fig. 5) ausgestattet, welcher insbesondere stromauf bzw. oberhalb des Verbindungsbereiches 16 der beiden Leitungen 15a, 15b - hier: im unteren Abschnitt der Abzweigleitung 17 - angeordnet ist und dort angestautes Streugut zu erfassen vermag, um das Erreichen des maximalen Befüllungsgrades an Streugut in beiden Behälterteilen 2a, 2b des Arbeitsbehälters 3 (das Streugut staut sich in beide Leitungen 13a, 13b der Einheit 14 bis in deren Verbindungsbereich 16 hinein) zu identifizieren. Der (nicht gezeigte) Aktuator zur bedarfsweisen Zusteuerung der Verschlussklappe 9 der Auslassöffnung 8 des Vorratsbehälters 1 (vgl. Fig. 1 und 2) ist mit dem Sensor 18 der Befüllungsgrad-Erfassungseinrichtung wirkverbunden, um die Auslassöffnung 8 zu verschließen, sobald der Sensor 18 dort angestautes Streugut, welches für das Erreichen eines maximalen Befüllungsgrades in beiden Behälterteilen 2a, 2b des Arbeitsbehälters 3 repräsentativ ist, identifiziert hat, so dass eine Überfüllung des Arbeitsbehälters 3 zuverlässig vermieden wird. Sobald anlässlich einer (weiteren) Entnahme von Streugut aus dem Arbeitsbehälter 3 mittels der Dosierorgane 5a, 5b der Füllkegel an Streugut in einem oder beiden Behälterteil(en) 2a, 2b des Arbeitsbehälters 3 abgesunken und das im Bereich des Sensors 18 angestaute Streugut dadurch in das/die Behälterteil(e) 2a, 2b hineingerieselt ist, kann der Sensor 18 dies identifizieren und kann der Aktuator die Verschlussklappe 9 der Auslassöffnung 8 der Arbeitsbehälters 1 folglich wieder öffnen, um weiteres Streugut in den Arbeitsbehälter 3 zu überführen.

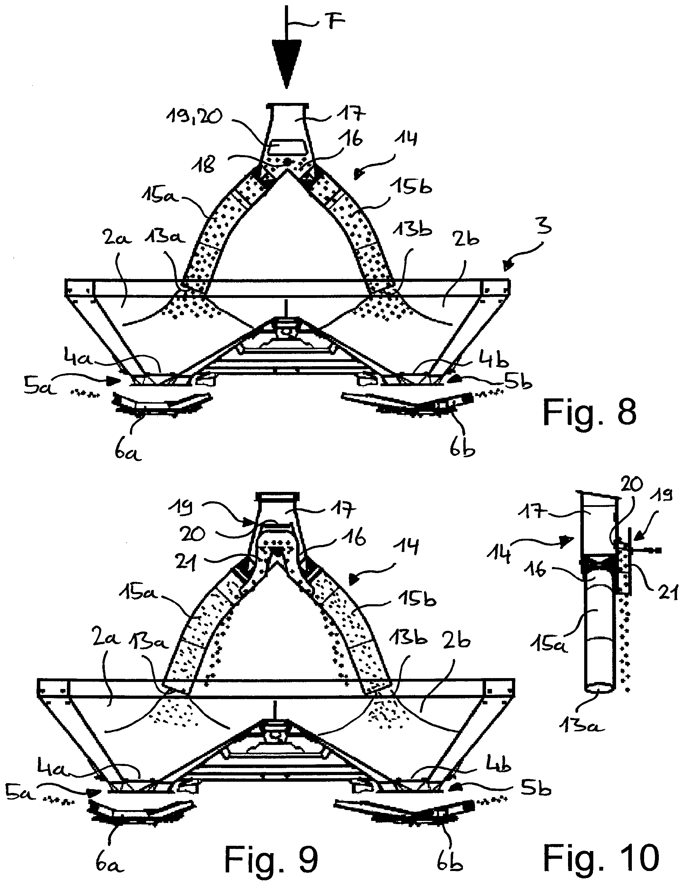

Um insbesondere eine Beschädigung des (nicht gezeigten) Antriebs der Schnecke 12 der Fördereinrichtung 10, wie sie beim Anfahren der Schnecke 12 in dem mit Streugut befüllten Förderrohr 11 andernfalls auftreten könnte, zu verhindern, sieht eine vorteilhafte Weiterbildung der Vorrichtung vor, dass der Schneckenantrieb mit dem Sensor 18 der Befüllungsgrad-Erfassungseinrichtung (oder auch mit dem der Verschlussklappe 9 der Auslassöffnung 8 des Vorratsbehälters 1 zugeordneten Aktuator) wirkverbunden ist, wobei der Schneckenantrieb steuerungstechnisch derart eingerichtet ist, dass er das Förderrohr 11 der Fördereinrichtung 10 durch entsprechendes Drehen der Schnecke 12 leerfördert, nachdem der Sensor 18 das Erreichen des maximalen Befüllungsgrades an Streugut durch Anstauen des Streugutes bis in zu dem Sensor 18 identifiziert hat (oder auch nachdem der Aktuator die Auslassöffnung 8 durch entsprechendes Betätigen der Verschlussklappe 9 zugesteuert hat). Damit der auf diese Weise geförderte, noch in dem Förderrohr 11 befindliche Rest an Streugut trotz Anstauens des Streugutes aus beiden Behälterteilen 2a, 2b des Arbeitsbehälters 3 bis in den mit dem Sensor 18 versehenen Verbindungsbereich 16 der beiden Leitungen 15a, 15b der Einheit 14 hinein in den Arbeitsbehälter 3 überführt werden kann, ist die Abzweigleitung 17 der Einheit 14 oberhalb der mit den Auslässen 13a, 13b versehenen Leitungen 15a, 15b sowie insbesondere auch oberhalb des Sensors 18 mit einem Überlauf 19 ausgestattet (vgl. insbesondere Fig. 3 und 4). Der Überlauf 19 umfasst beim vorliegenden Ausführungsbeispiel eine in einer Seitenwand der Abzweigleitung 17 angeordnete Öffnung 20, aus welcher das Streugut - sofern das Streugut bis an die Unterseite der Öffnung 20 angestaut ist - austreten kann, um in je eine etwa parallel zu den Leitungen 15a, 15b angeordnete Rutsche 21 zu gelangen, aus welcher es anteilig in die beiden Behälterteile 2a, 2b des Arbeitsbehälters 3 fällt. In Fig. 10 ist dies nochmals schematisch gezeigt.

In den Fig. 6 bis 7 sind exemplarisch verschiedene Zustände der Befüllung der beiden Behälterteile 2a, 2b des Arbeitsbehälters 1 schematisch wiedergegeben. Die Förderrichtung des mittels der Fördereinrichtung 10 aus dem Vorratsbehälter 1 in die Einheit 14 und von dieser über deren Auslässe 13a, 13b in die Behälterteile 2a, 2b des Arbeitsbehälters 3 überführten Streugutes ist mit dem Pfeil F angedeutet.

In der in Fig. 6 dargestellten Situation, wie sie beispielsweise beim Streuen eines symmetrischen Streubildes auftritt, wenn der Landwirt mit seinem Streugutverteiler ein Feld entlang paralleler Feldfahrgassen im Feldinnern abfährt, ist der Befüllungsgrad beider Behälterteile 2a, 2b des Arbeitsbehälters 3 etwa derselbe. Dabei stehen in Fig. 6 die Füllkegel an Streugut in beiden Behälterteilen 2a, 2b bereits bis in den Bereich der Auslässe 13a, 13b der Leitungen 15a, 15b der Einheit 14 an, ohne dass sich das Streugut jedoch bereits bis in diese hinein anstaut. Beide Auslässe sind folglich (noch) nicht blockiert; die Auslassöffnung 8 des Vorratsbehälters 1 (Fig. 1 und 2) ist geöffnet; die Fördereinrichtung 10 (Fig. 1 und 2) verrichtet ihren Betrieb.

In der in Fig. 7 gezeigten Situation, wie sie beispielsweise beim Streuen eines asymmetrischen Streubildes auftritt, wenn der Landwirt mit seinem Streugutverteiler den Feldrand entlang einer Grenzfahrgasse im Bereich des Feldrandes abfährt, ist der Befüllungsgrad beider Behälterteile 2a, 2b des Arbeitsbehälters 3 unterschiedlich, da der Streugutbedarf auf der einen Seite größer ist als auf der anderen Seite. In Fig. 7 dosiert das rechte Dosierorgan 5b daher einen größeren Massenstrom an Streugut auf die rechte Verteilerscheibe 6b als das linke Dosierorgan 5a auf die linke Verteilerscheibe 6a. Der Füllkegel an Streugut des in Fig. 7 rechten Behälterteils 2b ist folglich niedriger als der Füllkegel in dem linken Behälterteil 2a, welcher sein Maximum erreicht hat und sich bereits durch den linken Auslass 13a in die linke Leitung 15a bis zu deren Verbindungsbereich 16 mit der rechten Leitung 15b hinein staut. Der linke Auslass 13a wird dadurch blockiert und das Streugut gelangt über die Abzweigleitung 17 nur noch über die rechte Leitung 15b und den rechten Auslass 13b in das rechte Behälterteil 2b. Die Auslassöffnung 8 des Vorratsbehälters 1 (Fig. 1 und 2) ist geöffnet; die Fördereinrichtung 10 (Fig. 1 und 2) verrichtet ihren Betrieb.

In der in Fig. 8 wiedergegebenen Situation ist ein Zustand erreicht, bei welchem die Füllkegel an Streugut in beiden Behälterteilen 2a, 2b des Arbeitsbehälters 3 ihr Maximum erreicht haben und sich das Streugut bereits durch beide Auslässe 13a, 13b in beide Leitungen 15a, 15b bis zu deren Verbindungsbereich 16 hinein staut. Beide Auslässe 13a, 13b werden dadurch blockiert und der unmittelbar oberhalb des Verbindungsbereiches 16 angeordnete Sensor 18 hat einen dortigen Stau des Streugutes identifiziert. Die Auslassöffnung 8 des Vorratsbehälters 1 (Fig. 1 und 2) ist daher geschlossen worden; die Fördereinrichtung 10 (Fig. 1 und 2) befindet sich im Stillstand oder im Leerlauf.

Die Situation gemäß Fig. 9 entspricht der Situation unmittelbar vor Erreichen der in Fig. 8 wiedergegebenen Situation, dergemäß die Füllkegel an Streugut in beiden Behälterteilen 2a, 2b des Arbeitsbehälters 3 ihr Maximum erreicht haben und sich das Streugut (gerade) durch beide Auslässe 13a, 13b in beide Leitungen 15a, 15b bis zu deren Verbindungsbereich 16 hinein staut. Der Sensor 18 hat (gerade) einen dortigen Stau des Streugutes identifiziert und ist die Auslauföffnung 8 des Vorratsbehälters 1 (Fig. 1 und 2) daher mittels der Verschlussklappe 9 (gerade) geschlossen worden. Die in Fig. 9 gezeigte Situation unterscheidet sich von der gemäß Fig. 8 nun dadurch, dass die Fördereinrichtung 10 (Fig. 1 und 2) den in ihrem Förderrohr 11 noch befindlichen Rest an Streugut durch fortwährendes Drehen der Schnecke 12 leerfördert, wobei dieser Rest an Streugut über die Öffnung 20 des Überlaufes 19 und dessen Rutsche 21 (in Fig. 6 bis 8 nicht gezeigt) an den Auslässen 13a, 13b vorbei in die beiden Behälterteile 2a, 2b des Arbeitsbehälters 3 überführt wird. In der Detailansicht gemäß Fig. 10 ist dies von der Seite her betrachtet ebenfalls erkennbar.

## Patentansprüche

1. Verfahren zum Überführen von pulver- oder partikelförmigem Schüttgut, insbesondere Streugut, von einem Vorratsbehälter (1) in einen wenigstens zwei voneinander getrennte Behälterteile (2a, 2b) aufweisenden Arbeitsbehälter (3), wobei das Schüttgut aus dem unteren Bereich eines jeweiligen Behälterteils (2a, 2b) des Arbeitsbehälters (3) mittels je eines getrennt voneinander steuerbaren Dosierorgans (5a, 5b) aus dem jeweiligen Behälterteil (2a, 2b) ausgebracht wird, wobei das Schüttgut aus einer Auslassöffnung (8) des Vorratsbehälters (1) mittels einer den voneinander getrennten Behälterteilen (2a, 2b) gemeinsamen Fördereinrichtung (10) gefördert und über einen, einem jeweiligen Behälterteil (2a, 2b) zugeordneten Auslass (13a, 13b) dem jeweiligen Behälterteil (2a, 2b) von oben aufgegeben wird, wobei zumindest ein vorherbestimmtes Maximum des Befüllungsgrades an Schüttgut in einem jeweiligen Behälterteil (2a, 2b) erfasst und, sobald der Befüllungsgrad eines Behälterteils (2a, 2b) das vorherbestimmte Maximum erreicht hat, der diesem Behälterteil (2a, 2b) zugeordnete Auslass (13a, 13b) selbsttätig blockiert und das Schüttgut nur noch wenigstens einem anderen Behälterteil (2b, 2a), dessen Befüllungsgrad geringer ist als das vorherbestimmte Maximum, über den diesem zugeordneten Auslass (13b, 13a) aufgegeben wird, wobei der Auslass (13a, 13b) eines jeweiligen Behälterteils (2a, 2b), dessen Befüllungsgrad das vorherbestimmte Maximum erreicht hat, durch gestautes Schüttgut blockiert wird, indem die Behälterteile (2a, 2b) des Arbeitsbehälters (3) mit je einer von oben auf die Behälterteile (2a, 2b) zu führenden oder in diese hineinragenden Leitung (15a, 15b) mit dem an deren freien Ende angeordneten Auslass (13a, 13b) versehen werden, wobei die Leitungen (15a, 15b) an ihren den Behälterteilen (2a, 2b) zugewandten, den freien Enden (13a, 13b) entgegengesetzten Enden miteinander verbunden (16) sind, wobei das Schüttgut aus dem Vorratsbehälter (1) in diesen Verbindungsbereich (16) hinein gefördert wird, so dass das Schüttgut in derjenigen Leitung (15a, 15b), welche dem einen Behälterteil (2a, 2b) zugeordnet ist, welches den vorherbestimmten maximalen Befüllungsgrad erreicht hat, bis in den Verbindungsbereich (16) mit wenigstens einer weiteren, einem anderen Behälterteil (2b, 2a) zugeordneten Leitung (15b, 15a) gestaut wird, so dass der dem einen Behälterteil (2a, 2b) zugeordnete Auslass (13a, 13b) folglich blockiert und das Schüttgut nur noch über die andere(n) Leitung(en) (15b, 15a) mit dem/den anderen Auslass/Auslässen (13b, 13a) in das/die andere(n) Behälterteil(e) (2b, 2a) überführt wird.

2. Verfahren nach Anspruch 1, **dadurch gekennzeichnet, dass** die Fördereinrichtung (10) angehalten und/oder die Auslassöffnung (8) des Vorratsbehälters (1) geschlossen wird, sobald der Befüllungsgrad eines jeden Behälterteils (2a, 2b) des Arbeitsbehälters (1) das vorherbestimmte Maximum erreicht hat.

3. Verfahren nach Anspruch 2, **dadurch gekennzeichnet, dass** die Fördereinrichtung (10) nach dem Verschließen der Auslassöffnung (8) des Vorratsbehälters (1) leer gefördert wird.

4. Verfahren nach Anspruch 3, **dadurch gekennzeichnet, dass** der nach Verschließen der Auslassöffnung (8) des Vorratsbehälters (1) in der Fördereinrichtung (10) befindliche Rest an Schüttgut über wenigstens einen, den Auslässen (13a, 13b) der Behälterteile (2a, 2b) des Arbeitsbehälters (1) zugeordneten Überlauf (19) wenigstens einem oder sämtlichen Behälterteilen (2a, 2b) aufgegeben wird.

5. Verfahren nach einem der Ansprüche 1 bis 4, **dadurch gekennzeichnet, dass** das Erreichen des vorherbestimmten maximalen Befüllungsgrades in sämtlichen Behälterteilen (2a, 2b) des Arbeitsbehälters (3) sensorisch erfasst wird.

6. Verfahren nach Anspruch 5, **dadurch gekennzeichnet, dass** die sensorische Erfassung eines maximalen Befüllungsgrades sämtlicher Behälterteile (2a, 2b) des Arbeitsbehälters (3) mittels eines im oder stromauf des Verbindungsbereiches (16) der Leitungen (15a, 15b) angeordneten Sensors (18) geschieht, mittels welchem dort angestautes Schüttgut identifiziert wird.

7. Vorrichtung zum Überführen von pulver- oder partikelförmigem Schüttgut, insbesondere Streugut, von einem Vorratsbehälter (1) in einen wenigstens zwei voneinander getrennte Behälterteile (2a, 2b) aufweisenden Arbeitsbehälter (3), insbesondere zur Durchführung eines Verfahrens nach einem der vorangehenden Ansprüche, umfassend:
(a) einen Arbeitsbehälter (2) mit wenigstens zwei voneinander getrennten Behälterteilen (2a, 2b), welche jeweils im Bereich ihrer Unterseiten mit einem Auslauf (4a, 4b) ausgestattet sind, welcher mit je einem getrennt voneinander steuerbaren Dosierorgan (5a, 5b) versehen ist, um das Schüttgut aus dem jeweiligen Behälterteil (2a, 2b) auszubringen;
(b) einen Vorratsbehälter (1) zur Bevorratung des Schüttgutes, mit einer Auslassöffnung (8);
(c) eine der Auslassöffnung (8) des Vorratsbehälters (1) nachgeordnete, den voneinander getrennten Behälterteilen (2a, 2b) gemeinsame Fördereinrichtung (10) zur Überführung des Schüttgutes aus dem Vorratsbehälter (1) in die Behälterteile (2a, 2b) des Arbeitsbehälters (3), wobei das der Auslassöffnung (8) des Vorratsbehälters (1) abgewandte Ende der Fördereinrichtung (10) oberhalb des Arbeitsbehälters (3) angeordnet und mit je einem oberhalb eines jeweiligen Behälterteils (2a, 2b) angeordneten Auslass (13a, 13b) verbunden ist, um das aus dem Vorratsbehälter (1) geförderte Schüttgut den jeweiligen Behälterteilen (2a, 2b) des Arbeitsbehälters (3) von oben aufzugeben;
(d) eine einem jeweiligen Behälterteil (2a, 2b) des Arbeitsbehälters (3) zugeordnete Befüllungsgrad-Erfassungseinrichtung, welche zum Erfassen eines vorherbestimmten Maximums des Befüllungsgrades eines jeweiligen Behälterteils (2a, 2b) ausgebildet ist; und
(e) eine der Befüllungsgrad-Erfassungseinrichtung zugeordnete Blockiereinrichtung, welche zum Blockieren des demjenigen Behälterteil (2a, 2b), in welchem die Befüllungsgrad-Erfassungseinrichtung das Maximum des Befüllungsgrades identifiziert hat, zugeordneten Auslasses (13a, 13b) ausgebildet ist, während sie den/die Auslass/Auslässe (13b, 13a) des-/derjenigen Behälterteils/-teile (2b, 2a), in welchem/welchen die Befüllungsgrad-Erfassungseinrichtung kein Maximum des Befüllungsgrades identifiziert hat, freilässt,
wobei die Befüllungsgrad-Erfassungseinrichtung und die Blockiereinrichtung eine gemeinsame Einheit (14) bilden, wobei diese Einheit (14) je eine von oben auf die Behälterteile (2a, 2b) des Arbeitsbehälters (3) zu führende oder in diese hineinragende Leitung (15a, 15b) mit dem an deren freien Ende angeordneten Auslass (13a, 13b) aufweist, wobei die Leitungen (15a, 15b) an ihren den Behälterteilen (2a, 2b) zugewandten, den freien Enden (13a, 13b) entgegengesetzten Enden miteinander verbunden sind und dieser Verbindungsbereich (16), insbesondere über eine Abzweigleitung (17), mit der Fördereinrichtung (10) verbunden ist, um das Schüttgut in derjenigen Leitung (15a, 15b), welche dem einen Behälterteil (2a, 2b) zugeordnet ist, welches den vorherbestimmten maximalen Befüllungsgrad erreicht hat, bis in den Verbindungsbereich (16) mit wenigstens einer weiteren, einem anderen Behälterteil (2b, 2a) zugeordneten Leitung (15b, 15a) zu stauen und auf diese Weise den dem einen Behälterteil (2a, 2b) zugeordneten Auslass (13a, 13b) zu blockieren und das Schüttgut nur noch über die andere(n) Leitung(en) (15b, 15a) mit dem/den anderen Auslass/Auslässen (13b, 13a) in das/die andere(n) Behälterteil(e) (2b, 2a) zu überführen.

8. Vorrichtung nach Anspruch 7, **dadurch gekennzeichnet, dass** die Auslassöffnung (8) des Vorratsbehälters (1) mittels eines Aktuators verschließbar ist, wobei der Aktuator mit der Befüllungsgrad-Erfassungseinrichtung wirkverbunden ist und die Auslassöffnung (8) verschließt, sobald die Befüllungsgrad-Erfassungseinrichtung das vorherbestimmte Maximum des Befüllungsgrades in jedem Behälterteil (2a, 2b) des Arbeitsbehälters (3) identifiziert hat.

9. Vorrichtung nach Anspruch 8, **dadurch gekennzeichnet, dass** ein Antrieb der Fördereinrichtung (10) mit der Befüllungsgrad-Erfassungseinrichtung und/oder mit dem Aktuator der Auslassöffnung (8) des Vorratsbehälters (1) wirkverbunden ist, wobei der Antrieb die Fördereinrichtung (10) leerfördert, nachdem die Befüllungsgrad-Erfassungseinrichtung das vorherbestimmte Maximum des Befüllungsgrades in jedem Behälterteil (2a, 2b) des Arbeitsbehälters (3) identifiziert hat und/oder nachdem der Aktuator die Auslassöffnung (8) des Vorratsbehälters (1) zugesteuert hat.

10. Vorrichtung nach Anspruch 9, **dadurch gekennzeichnet, dass** den Auslässen (13a, 13b) der Behälterteile (2a, 2b) ein, insbesondere oberhalb derselben angeordneter, Überlauf (19) zugeordnet ist, um den von der Fördereinrichtung (10) geförderten Rest an Schüttgut wenigstens einem oder sämtlichen Behälterteilen (2a, 2b) aufzugeben.

11. Vorrichtung nach einem der Ansprüche 8 bis 10, **dadurch gekennzeichnet, dass** die Befüllungsgrad-Erfassungseinrichtung ferner einen, insbesondere separaten, Sensor (18) aufweist, um das Erreichen des vorherbestimmten maximalen Befüllungsgrades in sämtlichen Behälterteilen (2a, 2b) des Arbeitsbehälters (3) sensorisch zu erfassen.

12. Vorrichtung nach Anspruch 11, **dadurch gekennzeichnet, dass** die aus der Befüllungsgrad-Erfassungseinrichtung und der Blockiereinrichtung gebildete Einheit (14) einen im oder stromauf des Verbindungsbereiches (16) der Leitungen (15a, 15b) angeordneten Sensor (18) aufweist, um dort angestautes Schüttgut zu identifizieren.

13. Vorrichtung nach einem der Ansprüche 8 bis 12, **dadurch gekennzeichnet, dass** die Fördereinrichtung (10) von einem Schneckenförderer (11, 12) gebildet ist.

14. Vorrichtung nach einem der Ansprüche 8 bis 13, **dadurch gekennzeichnet, dass** der Vorratsbehälter (1) und die diesem zugeordnete Fördereinrichtung (10) auf einem fahrbaren Chassis, wie einem Anhänger oder einem motorisch angetriebenen Fahrzeug, angeordnet sind.

15. Vorrichtung nach Anspruch 14, **dadurch gekennzeichnet, dass** der Arbeitsbehälter (3) mit den Behälterteilen (2a, 2b) und den diesen zugeordneten Dosierorganen (5a, 5b) mit dem Chassis koppelbar ist.

16. Vorrichtung nach Anspruch 14 oder 15, **dadurch gekennzeichnet, dass** es sich bei dem Vorratsbehälter (1) um ein Streugutreservoir handelt, während es sich bei dem Arbeitsbehälter (3) um den Arbeitsbehälter (3) eines Streugutverteilers, insbesondere in Form eines Zweischeibenstreuers, handelt.

## Claims

1. Method for transferring pulverulent or particulate bulk material, in particular spreading material, from a storage container (1) into a working container (3) having at least two mutually separate container parts (2a, 2b), wherein the bulk material from the lower region of a respective container part (2a, 2b) of the working container (3) by means of in each case one metering member (5a, 5b) that is controllable in a mutually separate manner is retrieved from the respective container part (2a, 2b), wherein the bulk material by means of a conveying installation (10) that is common to the mutually separate container parts (2a, 2b) is conveyed from an outlet opening (8) of the storage container (1) and by way of an outlet (13a, 13b) which is assigned to a respective container part (2a, 2b) is supplied from above to the respective container part (2a, 2b), wherein at least one predetermined maximum of the filling level of bulk material in a respective container part (2a, 2b) is detected and, as soon as the filling level of one container part (2a, 2b) has reached the predetermined maximum, the outlet (13a, 13b) that is assigned to this container part (2a, 2b) is blocked in a self-acting manner, and the bulk material henceforth is only supplied to at least one other container part (2b, 2a), the filling level of the latter being lower than the predetermined maximum, by way of the outlet (13b, 13a) assigned thereto, wherein the outlet (13a, 13b) of a respective container part (2a, 2b) of which the filling level has reached the predetermined maximum is blocked by backlogged bulk material in that the container parts (2a, 2b) of the working container (3) are provided in each case with one line (15a, 15b) that leads from above towards the container parts (2a, 2b) or protrudes thereinto, said lines (15a, 15b) at the free ends thereof having the outlet (13a, 13b) disposed thereon, wherein the lines (15a, 15b) are interconnected (16) at the ends thereof that face the container parts (2a, 2b) and are opposite the free ends (13a, 13b), wherein the bulk material is conveyed from the storage container (1) into this connection region (16) such that the bulk material in that line (15a, 15b) which is assigned to the one container part (2a, 2b) that has reached the predetermined maximum filling level is backlogged up to the connection region (16) to at least one further line (15b, 15a) that is assigned to another container part (2b, 2a) such that the outlet (13a, 13b) that is assigned to the one container part (2a, 2b) is consequently blocked, and the bulk material henceforth is only transferred into the other container part/parts (2b, 2a) by way of the other line/lines (15b, 15a) having the other outlet/outlets (13b, 13a).

2. Method according to Claim 1, **characterized in that** the conveying installation (10) is stopped and/or the outlet opening (8) of the storage container (1) is closed as soon as the filling level of each one of the container parts (2a, 2b) of the working container (1) has reached the predetermined maximum.

3. Method according to Claim 2, **characterized in that** the conveying installation (10), after the closing of the outlet opening (8) of the storage container (1), conveys until empty.

4. Method according to Claim 3, **characterized in that** the remainder of bulk material that is located in the conveying installation (10) after the closing of the outlet opening (8) of the storage container (1) by way of at least one overflow (19) that is assigned to the outlets (13a, 13b) of the container parts (2a, 2b) of the working container (1) is supplied to at least one or all of the container parts (2a, 2b).

5. Method according to one of Claims 1 to 4, **characterized in that** the reaching of the predetermined maximum filling level in all of the container parts (2a, 2b) of the working container (3) is detected by sensors.

6. Method according to Claim 5, **characterized in that** the detection of a maximum filling level of all of the container parts (2a, 2b) of the working container (3) by sensors is performed by means of a sensor (18) that is disposed in or upstream of the connection region (16) of the lines (15a, 15b), bulk material backlogged therein being identified by means of said sensor (18).

7. Device for transferring pulverulent or particulate bulk material, in particular spreading material, from a storage container (1) into a working container (3) having at least two mutually separate container parts (2a, 2b), in particular for carrying out a method according to one of the preceding claims, said device comprising:
(a) a working container (2) having at least two mutually separate container parts (2a, 2b) which in each case in the region of the lower sides thereof are equipped with a discharge (4a, 4b) which in each case is provided with a metering member (5a, 5b) that is controllable in a mutually separate manner so as to retrieve the bulk material from the respective container part (2a, 2b);
(b) a storage container (1) for storing the bulk material, having an outlet opening (8);
(c) a conveying installation (10) that is disposed downstream of the outlet opening (8) of the storage container (1) and is common to the mutually separate container parts (2a, 2b), for transferring the bulk material from the storage container (1) into the container parts (2a, 2b) of the working container (3), wherein the end of the conveying installation (10) that faces away from the outlet opening (8) of the storage container (1) is disposed above the working container (3) and is connected in each case to one outlet (13a, 13b) that is disposed above a respective container part (2a, 2b) so as to supply the bulk material that is conveyed from the storage container (1) from above to the respective container parts (2a, 2b) of the working container (3);
(d) a filling level detection installation which is assigned to a respective container part (2a, 2b) of the working container (3) and which is configured to detect a predetermined maximum of the filling level of a respective container part (2a, 2b); and
(e) a blocking installation which is assigned to the filling level detection installation and which is configured to block the outlet (13a, 13b) that is assigned to that container part (2a, 2b) in which the filling level detection installation has identified the maximum of the filling level, while said blocking installation releases the outlet/outlets (13b, 13a) of that/those container part/parts (2b, 2a) in which the filling level detection installation has not identified any maximum of the filling level,
wherein the filling level detection installation and the blocking installation form a common unit (14), wherein this unit (14) has in each case one line (15a, 15b) which leads from above towards the container parts (2a, 2b) of the working container (3) or protrudes thereinto, said lines (15a, 15b) at the free ends thereof having the outlet (13a, 13b) disposed thereon, wherein the lines (15a, 15b) are interconnected at the ends thereof that face the container parts (2a, 2b) and are opposite the free ends (13a, 13b), and this connection region (16) is connected to the conveying installation (10), in particular by way of a branch line (17), so as to backlog the bulk material in that line (15a, 15b) which is assigned to the one container part (2a, 2b) which has reached the predetermined maximum filling level up to the connection region (16) to at least one further line (15b, 15a) that is assigned to another container part (2b, 2a), and in this manner to block the outlet (13a, 13b) that is assigned to the one container part (2a, 2b) and to henceforth only transfer the bulk material into the other container part/parts (2b, 2a) by way of the other lines/lines (15b, 15a) having the other outlet/outlets (13b, 13a).

8. Device according to Claim 7, **characterized in that** the outlet opening (8) of the storage container (1) is closable by means of an actuator, wherein the actuator is operatively connected to the filling level detection installation and closes the outlet opening (8) as soon as the filling level detection installation has identified the predetermined maximum of the filling level in each container part (2a, 2b) of the working container (3).

9. Device according to Claim 8, **characterized in that** a drive of the conveying installation (10) is operatively connected to the filling level detection installation and/or to the actuator of the outlet opening (8) of the storage container (1), wherein the drive conveys the conveying installation (10) until empty, once the filling level detection installation has identified the predetermined maximum of the filling level in each container part (2a, 2b) of the working container (3) and/or once the actuator has actuated the outlet opening (8) of the storage container (1) so as to be closed.

10. Device according to Claim 9, **characterized in that** the outlets (13a, 13b) of the container parts (2a, 2b) are assigned an overflow (19) which is in particular disposed above said outlets (13a, 13b) so as to supply the remainder of bulk material that is conveyed by the conveying installation (10) to at least one or all of the container parts (2a, 2b).

11. Device according to one of Claims 8 to 10, **characterized in that** the filling level detection installation furthermore has an, in particular separate, sensor (18) so as to detect the reaching of the predetermined maximum filling level in all of the container parts (2a, 2b) of the working container (3) by sensors.

12. Device according to Claim 11, **characterized in that** the unit (14) formed from the filling level detection installation and the blocking installation has a sensor (18) that is disposed in or upstream of the connection region (16) of the lines (15a, 15b) so as to identify bulk material that is backlogged therein.

13. Device according to one of Claims 8 to 12, **characterized in that** the conveying installation (10) is formed by a screw conveyor (11, 12).

14. Device according to one of Claims 8 to 13, **characterized in that** the storage container (1) and the conveying installation (10) that is assigned thereto are disposed on a mobile chassis, such as a trailer or a motor-driven vehicle.

15. Device according to Claim 14, **characterized in that** the working container (3) having the container parts (2a, 2b) and the metering members (5a, 5b) assigned thereto are coupleable to the chassis.

16. Device according to Claim 14 or 15, **characterized in that** the storage container (1) is a spreading material reservoir, while the working container (3) is the working container (3) of a spreading material distributor, in particular in the form of a dual-disc spreader.

## Revendications

1. Procédé pour transférer un produit en vrac sous forme de poudre ou de particules, notamment un produit dispersible, d'un réservoir de stockage (1) dans un réservoir de travail (3) comportant au moins deux parties de réservoir (2a, 2b) séparées l'une de l'autre, le produit en vrac provenant de la région inférieure d'une partie de réservoir (2a, 2b) respective du réservoir de travail (3) étant sorti hors de la partie de réservoir (2a, 2b) respective à l'aide respectivement d'un organe de dosage (5a, 5b) pouvant être commandé séparément de l'autre, le produit en vrac étant transporté hors d'une ouverture de sortie (8) du réservoir de stockage (1) au moyen d'un dispositif de transport (10) commun des parties de réservoir (2a, 2b) séparées l'une de l'autre et étant amené par en haut à la partie de réservoir (2a, 2b) respective via une sortie (13a, 13b) associée à une partie de réservoir (2a, 2b) respective, au moins un maximum prédéfini du degré de remplissage en produit en vrac étant détecté dans une partie de réservoir (2a, 2b) respective et dès que le degré de remplissage d'une partie de réservoir (2a, 2b) a atteint le maximum prédéfini, la sortie (13a, 13b) associée à cette partie de réservoir (2a, 2b) se bloque automatiquement et le produit en vrac est amené uniquement encore à au moins une autre partie de réservoir (2b, 2a) dont le degré de remplissage est plus réduit que le maximum prédéfini, via la sortie (13b, 13a) associée à celui-ci, la sortie (13a, 13b) d'une partie de réservoir (2a, 2b) respective dont le degré de remplissage a atteint le maximum prédéfini est bloquée par le produit en vrac retenu en ce que les parties de réservoir (2a, 2b) du réservoir de travail (3) sont respectivement pourvues d'une conduite (15a, 15b) à guider par en haut sur les parties de réservoir (2a, 2b) ou rentrant dans celles-ci avec la sortie (13a, 13b) disposée au niveau de son extrémité libre, les conduites (15a, 15b) étant reliées (16) entre elles au niveau de leurs extrémités orientées vers les parties de réservoir (2a, 2b), opposées aux extrémités libres (13a, 13b), le produit en vrac étant transporté hors du réservoir de stockage (1) jusque dans cette région de jonction (16) de sorte que le produit en vrac dans ladite conduite (15a, 15b) associée à la partie de réservoir (2a, 2b) ayant atteint le degré de remplissage maximal prédéfini soit retenu dans la région de jonction (16) avec au moins une conduite (15b, 15a) supplémentaire associée à une autre partie de réservoir (2b, 2a), de sorte que la sortie (13a, 13b) associée à cette même partie de réservoir (2a, 2b) soit bloquée en conséquence et que le produit en vrac ne soit plus transféré dans l'autre partie et/ou les autres parties de réservoir (2b, 2a) via l'autre conduite et/ou les autres conduites (15b, 15a) avec l'autre sortie et/ou des autres sorties (13b, 13a).

2. Procédé selon la revendication 1, **caractérisé en ce que** le dispositif de transport (10) est arrêté et/ou que l'ouverture de sortie (8) du réservoir de stockage (1) est fermée dès que le degré de remplissage d'une partie de réservoir (2a, 2b) ou l'autre du réservoir de travail (1) a atteint le maximum prédéfini.

3. Procédé selon la revendication 2, **caractérisé en ce que** le dispositif de transport (10) est transporté vide après fermeture de l'ouverture de sortie (8) du réservoir de stockage (1).

4. Procédé selon la revendication 3, **caractérisé en ce que** le reste de produit en vrac se trouvant dans le dispositif de transport (10) après la fermeture de l'ouverture de sortie (8) du réservoir de stockage (1) est remis dans au moins une ou à l'ensemble des parties de réservoir (2a, 2b) via au moins un trop-plein (19) associé aux sorties (13a, 13b) des parties de réservoir (2a, 2b) du réservoir de travail (1).

5. Procédé selon l'une quelconque des revendications 1 à 4, **caractérisé en ce que** le degré de remplissage maximal prédéfini atteint dans l'ensemble des parties de réservoir (2a, 2b) du réservoir de travail (3) est détecté par voie de capteurs.

6. Procédé selon la revendication 5, **caractérisé en ce que** la détection par voie de capteurs d'un degré de remplissage maximal de l'ensemble des parties de réservoir (2a, 2b) du réservoir de travail (3) s'effectue à l'aide d'un capteur (18) à l'aide duquel le produit en vrac retenu en cet endroit est identifié, ledit capteur étant disposé dans la région de jonction (16) des conduites (15a, 15b) ou en amont de celle-ci.

7. Dispositif pour transférer du produit en vrac sous forme de poudre ou de particules, notamment de produit dispersible, d'un réservoir de stockage (1) dans un réservoir de travail (3) comportant au moins deux parties de réservoir (2a, 2b) séparées l'une de l'autre, notamment pour la mise en oeuvre d'un procédé selon l'une quelconque des revendications précédentes, comprenant :
(a) un réservoir de travail (2) avec au moins deux parties de réservoir (2a, 2b) séparées l'une de l'autre respectivement dotées, dans la région de leurs côtés inférieurs, d'une évacuation (4a, 4b) respectivement pourvue d'un organe de dosage (5a, 5b) pouvant être commandé séparément pour faire sortir le produit en vrac hors de la partie de réservoir (2a, 2b) respective ;
(b) un réservoir de stockage (1) pour stocker le produit en vrac, avec une ouverture de sortie (8) ;
(c) un dispositif de transport (10) placé en aval de l'ouverture de sortie (8) du réservoir de stockage (1), commun aux parties de réservoir (2a, 2b) séparées l'une de l'autre pour transférer le produit en vrac hors du réservoir de stockage (1) jusque dans les parties de réservoir (2a, 2b) du réservoir de travail (3), l'extrémité, opposée à l'ouverture de sortie (8) du réservoir de stockage (1), du dispositif de transport (10) étant disposée au-dessus du réservoir de travail (3) et étant reliée à respectivement une sortie (13a, 13b) disposée au-dessus d'une partie de réservoir (2a, 2b) respective, pour amener le produit en vrac transporté hors du réservoir de stockage (1) par en haut aux parties de réservoir (2a, 2b) respectives du réservoir de travail (3) ;
(d) un dispositif de détection de degré de remplissage associé à une partie de réservoir (2a, 2b) respective du réservoir de travail (3) réalisé pour détecter un maximum prédéfini du degré de remplissage d'une partie de réservoir (2a, 2b) respective ; et
(e) un dispositif de blocage associé au dispositif de détection de degré de remplissage réalisé pour bloquer la sortie (13a, 13b) associée à la partie de réservoir (2a, 2b) dans laquelle le dispositif de détection de degré de remplissage a identifié le maximum du degré de remplissage pendant qu'il laisse libre la sortie et/ou les sorties (13b, 13a) de la partie et/ou des parties de réservoir (2b, 2a) dans laquelle et/ou lesquelles le dispositif de détection de degré de remplissage n'a identifié aucun maximum du degré de remplissage ;
le dispositif de détection de degré de remplissage et le dispositif de blocage formant une unité (14) commune, cette unité (14) comportant respectivement une conduite (15a, 15b) à guider par en haut sur les parties de réservoir (2a, 2b) du réservoir de travail (3) avec la sortie (13a, 13b) disposée au niveau de son extrémité libre, les conduites (15a, 15b) étant reliées entre elles au niveau de leurs extrémités orientées vers les parties de réservoir (2a, 2b), opposées aux extrémités libres (13a, 13b), et cette région de jonction (16) étant reliée au dispositif de transport (10), notamment via une conduite de déviation (17) pour retenir le produit en vrac dans ladite conduite (15a, 15b) associée à une partie de réservoir (2a, 2b) ayant atteint le degré de remplissage maximal prédéfini jusqu'à dans la région de jonction (16) avec au moins une conduite (15b, 15a) supplémentaire associée à une autre partie de réservoir (2b, 2a) et pour bloquer de cette façon la sortie (13a, 13b) associée à la partie de réservoir (2a, 2b) en question et le produit en vrac n'étant plus transféré dans l'autre partie et/ou les autres parties de réservoir (2b, 2a) que via l'autre conduite et/ou les autres conduites (15b, 15a) avec la sortie et/ou les sorties (13b, 13a).

8. Dispositif selon la revendication 7, **caractérisé en ce que** l'ouverture de sortie (8) du réservoir de stockage (1) peut être refermée à l'aide d'un actionneur, l'actionneur étant relié activement au dispositif de détection de degré de remplissage et fermant l'ouverture de sortie (8) dès lors que le dispositif de détection de degré de remplissage a identifié le maximum prédéfini du degré de remplissage dans chaque partie de réservoir (2a, 2b) du réservoir de travail (3).

9. Dispositif selon la revendication 8, **caractérisé en ce qu'**un entraînement du dispositif de transport (10) est relié activement au dispositif de détection de degré de remplissage et/ou à l'actionneur de l'ouverture de sortie (8) du réservoir de stockage (1), l'entraînement transportant vide le dispositif de transport (10) après que le dispositif de détection de degré de remplissage a identifié le maximum prédéfini du degré de remplissage dans chaque partie de réservoir (2a, 2b) du réservoir de travail (3) et/ou après que l'actionneur a commandé l'ouverture de sortie (8) du réservoir de stockage (1).

10. Dispositif selon la revendication 9, **caractérisé en ce qu'**un trop-plein (19) notamment disposé au-dessus de celui-ci est associé aux sorties (13a, 13b) des parties de réservoir (2a, 2b), pour remettre le reste de produit en vrac transporté par le dispositif de transport (10) dans au moins une ou l'ensemble des parties de réservoir (2a, 2b).

11. Dispositif selon l'une quelconque des revendications 8 à 10, **caractérisé en ce que** le dispositif de détection de degré de remplissage comporte en outre un capteur (18) notamment séparé pour détecter par voie de capteurs lorsque le degré de remplissage maximal prédéfini est atteint dans l'ensemble des parties de réservoir (2a, 2b) du réservoir de travail (3).

12. Dispositif selon la revendication 11, **caractérisé en ce que** l'unité (14) formée par le dispositif de détection de degré de remplissage et le dispositif de blocage comporte un capteur (18) disposé dans la région de jonction (16) des conduites (15a, 15b) ou en amont de celle-ci pour identifier le produit en vrac retenu.

13. Dispositif selon l'une quelconque des revendications 8 à 12, **caractérisé en ce que** le dispositif de transport (10) est formé par un extracteur à vis sans fin (11, 12).

14. Dispositif selon l'une quelconque des revendications 8 à 13, **caractérisé en ce que** le réservoir de stockage (1) et le dispositif de transport (10) associé à lui sont disposés sur un châssis mobile, par exemple une remorque ou un véhicule à entraînement motorisé.

15. Dispositif selon la revendication 14, **caractérisé en ce que** le réservoir de travail (3) avec les parties de réservoir (2a, 2b) et les organes de dosage (5a, 5b) associés à celles-ci peut être couplé au châssis.

16. Dispositif selon la revendication 14 ou 15, **caractérisé en ce que** le réservoir de stockage (1) est un réservoir de produit dispersible tandis que le réservoir de travail (3) est le réservoir de travail (3) d'un épandeur de produit dispersible, notamment sous la forme d'un épandeur à deux disques.
